# EUROPÄISCHE PATENTSCHRIFT

(11) **EP 0 994 164 B1**
(45) Veröffentlichungstag und Bekanntmachung des Hinweises auf die Patenterteilung: **24.07.2002**
(21) Anmeldenummer: 99119101.6
(22) Anmeldetag: 04.10.1999
(51) Int. Cl.: C09B 67/00, C09B 67/10, C08K 5/3462, C09B 45/14

(54) **Pigmentpräparationen**
Pigment preparations
Préparations pigmentaires

(30) Priorität: 15.10.1998 DE 19847586
(43) Veröffentlichungstag der Anmeldung: 19.04.2000
(73) Patentinhaber: BAYER AG, 51368 Leverkusen (DE)
(72) Erfinder: Sommer, Richard, Dr., 51519 Odenthal (DE); Linke, Frank, 51069 Köln (DE); Herrmann, Udo, Dr., 41541 Dormagen (DE); Stolp, Gunther, Dr., 50679 Köln (DE)

(56) Entgegenhaltungen:
- EP-A- 0 073 463
- EP-A- 0 074 515
- FR-A- 2 121 048

## Beschreibung

Die Erfindung betrifft neue Pigmentpräparationen, Verfahren zu ihrer Herstellung sowie ihre Verwendung.

Aus EP-A-73 463 sind bereits koloristisch wertvolle Pigmente bekannt. Diese haben aber noch anwendungstechnische Nachteile. So sind die auf die beschriebene Weise hergestellten Pigmente beispielsweise sehr kornhart und müssen zur Erreichung der gewünschten Coloristik und damit der entsprechenden Teilchengröße in relativ zeitaufwendigen Dispergierverfahren verkleinert werden. Gleichsam weisen derartige Pigmente noch einige Nachteile in ihrer Dispergierbarkeit sowie ihrer Farbstärke auf.

Aufgabe der vorliegenden Erfindung war es daher, neue Pigmentformen bereitzustellen, die die oben beschriebenen Nachteile nicht mehr aufweisen.

Die Erfindung betrifft feste Pigmentpräparationen enthaltend als Pigment wenigstens einen Metallkomplex einer Azo-Verbindung, die in Form ihrer tautomeren Strukturen der Formel (I) entspricht 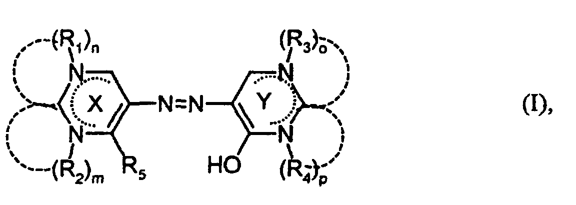 worin die mit
- X und Y: bezeichneten Ringe unabhängig voneinander je einen oder zwei Substituenten aus der Reihe =O, =S, =NR₇, -NR₆H₇, -OR₆, -SR₆, -COOR₆, - CN, -CONR₆R₇, -SO₂R₈, 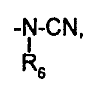 Alkyl, Cycloalkyl, Aryl und Aralkyl tragen können, wobei die Summe der endo- und exocyclischen Doppelbindungen für jeden der Ringe X und Y drei ist,
R₆ für Wasserstoff, Alkyl, Cycloalkyl, Aryl oder Aralkyl und
R₇ für Wasserstoff, Cyan, Alkyl, Cycloalkyl, Aryl, Aralkyl oder Acyl stehen und
R₈ Alkyl, Cycloalkyl, Aryl oder Aralkyl bezeichnet,
- R₁, R₂, R₃, R₄: unabhängig voneinander für Wasserstoff, Alkyl, Cycloalkyl, Aryl oder Aralkyl stehen und weiterhin, wie in Formel (I) durch die unterbrochenen Linien angedeutet wird, 5- oder 6-gliedrige Ringe ausbilden können, an die weitere Ringe ankondensiert sein können,
- R₅: -OH, -NR₆R₇, Alkyl, Cycloalkyl, Aryl oder Aralkyl bedeutet, wobei die für R₁ bis R₈ genannten CH-Bindungen enthaltenden Substituenten ihrerseits substituiert sein können und m, n, o, p 1 oder fiir den Fall, daß von den Ring-Stickstoffatomen Doppelbindungen ausgehen, wie in Formel (I) durch die punktierten Linien angedeutet wird, auch Null bedeuten können,
und der wenigstens eine andere Verbindung eingelagert enthält, dadurch gekennzeichnet, daß eine Anschlämmung der festen Pigmentpräparationen mit der 20-fachen Menge Wasser einen pH-Wert von >6,5 aufweist.

Bevorzugte organische Metallkomplexe sind dabei solche von Azo-Verbindungen, die in Form ihrer freien Säure einer der tautomeren Formen der Formel (I) entsprechen, bei denen der mit X gekennzeichnete Ring für einen Ring der Formeln 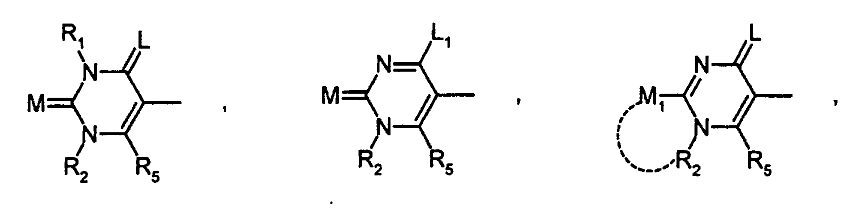 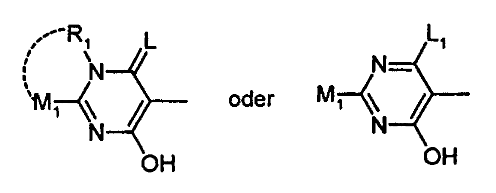 steht,
in denen
- L und M: unabhängig voneinander für =O, =S oder =NR₆ stehen
- L₁: Wasserstoff, -OR₆, -SR₆, -NR₆R₇, -COOR₆, -CONR₆R₇, -CN, Alkyl, Cycloalkyl, Aryl oder Aralkyl und
- M₁: -OR₆, -SR₆, -NR₆R₇, -COOR₆, -CONR₆R₇, -CN, -SO₂R₈, 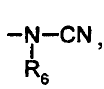 Alkyl, Cycloalkyl, Aryl oder Aralkyl bezeichnen, wobei die Substituenten M₁ und R₁ oder M₁ und R₂ einen 5- oder 6-gliedrigen Ring ausbilden können.

Besonders bevorzugte organische Metallkomplexe sind dabei solche von Azo-Verbindungen, die in Form ihrer freien Säuren einer ihrer tautomeren Strukturen der Formeln (II) oder (III) entsprechen 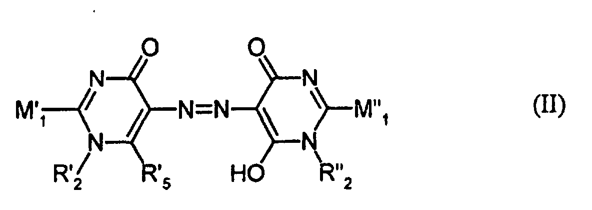 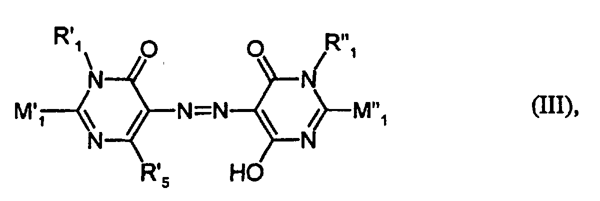 in denen
- R'₅: -OH oder -NH₂ bezeichnet,
- R'₁, R"₁, R'₂ und R"₂: jeweils für Wasserstoff steht und
- M'₁ und M"₁: unabhängig voneinander für Wasserstoff, -OH, -NH₂, -NHCN, Arylamino oder Acylamino stehen.

Ganz besonders bevorzugte Metallkomplexe sind dabei solche von Azo-Verbindungen der Formel (I), die in Form ihrer freien Säure einer der tautomeren Strukturen der Formel (IV) entsprechen 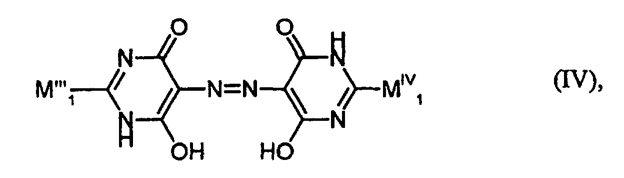 in denen
M"'₁ und M^{IV}₁ unabhängig voneinander OH und NHCN bedeuten.

Bevorzugt vor allem sind dabei organische Metallkomplexe solcher Azo-Verbindungen der Formel (I), die in Form ihrer freien Säure einer der tautomeren Strukturen der Formel (V) entsprechen

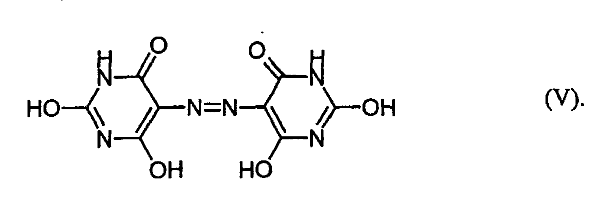

In den vorstehenden Formeln haben die Substituenten vorzugsweise die folgenden Bedeutungen:

Substituenten in der Bedeutung von Alkyl bezeichnen vorzugsweise C₁-C₆-Alkyl, das beispielsweise durch Halogen, wie Chlor, Brom oder Fluor, -OH, -CN, -NH₂ oder C₁-C₆-Alkoxy substituiert sein kann.

Substituenten in der Bedeutung von Cycloalkyl bezeichnen vorzugsweise C₃-C₇-Cycloalkyl, insbesondere C₅-C₆-Cycloalkyl, das beispielsweise durch C₁-C₆-Alkyl, C₁-C₆-Alkoxy, Halogen wie Cl, Br oder F, C₁-C₆-Alkoxy, -OH, -CN sowie NH₂ substituiert sein kann.

Substituenten in der Bedeutung von Aryl bezeichnen vorzugsweise Phenyl oder Naphthyl, die beispielsweise durch Halogen wie F, Cl oder Br, -OH, C₁-C₆-Alkyl, C₁-C₆-Alkoxy, -NH₂, -NO₂ sowie -CN sustituiert sein können.

Substituenten in der Bedeutung von Aralkyl bezeichnen bevorzugt Phenyl- oder Naphthyl-C₁-C₄-alkyl, die in den aromatischen Resten beispielsweise durch Halogen wie F, Cl oder Br, -OH, C₁-C₆-Alkyl, C₁-C₆-Alkoxy, -NH₂, -NO₂ sowie -CN substituiert sein können.

Substituenten in der Bedeutung von Acyl bezeichnen vorzugsweise (C₁-C₆-Alkyl)-carbonyl, Phenylcarbonyl, C₁-C₆-Alkylsulfonyl, Phenylsulfonyl, gegebenenfalls durch C₁-C₆-Alkyl, Phenyl und Naphthyl substituiertes Carbamoyl, gegebenenfalls durch C₁-C₆-Alkyl, Phenyl und Naphthyl substituiertes Sulfamoyl oder gegebenenfalls durch C₁-C₆-Alkyl, Phenyl und Naphthyl substituiertes Guanyl, wobei die genannten Alkylreste beispielsweise durch Halogen wie Cl, Br oder F, -OH, -CN, -NH₂ oder C₁-C₆-Alkoxy substituiert sein können und die genannten Phenyl- und Naphthylreste beispielsweise durch Halogen wie F, Cl oder Br, -OH, C₁-C₆-Alkyl, C₁-C₆-Alkoxy, -NH₂, -NO₂ und -CN substituiert sein können.

Für den Fall, daß M₁R₁ oder M₁R₂ oder M₁R₂ bzw. R₁, R₂, R₃, R₄, wie in Formel (I) durch die unterbrochenen Linien angedeutet wird, 5- oder 6-gliedrige Ringe ausbilden, handelt es sich vorzugsweise um Triazol-, Imidazol- oder Benzimidazol-, Pyrimidin- oder Chinazolin-Ringsysteme.

Als Metallkomplexe, worunter auch -Salze verstanden werden, der Formeln (I) bis (V) kommen vorzugsweise die Salze und Komplexe der Mono-, Di-, Tri- und Tetraanionen mit den Metallen Li, Cs, Mg, Cd, Co, Al, Cr, Sn, Pb, besonders bevorzugt Na, K, Ca, Sr, Ba, Zn, Fe, Ni, Cu und Mn, in Betracht.

Besonders bevorzugt sind Salze und Komplexe der Formeln (I) bis (V) mit zweioder dreiwertigen Metallen, ganz besonders die Nickelsalze und -komplexe.

Die Metallkomplexe, die wenigstens eine andere Verbindung, insbesondere eine organische Verbindung, eingelagert enthalten, können als Einlagerungsverbindungen, Interkalationsverbindungen sowie als feste Lösungen vorliegen.

Ganz besonders bevorzugt handelt es sich um Einschlußverbindungen, Interkalationsverbindungen und feste Lösungen, bei denen der Azobarbitursäure-Nickel-1:1-Komplex einer der tautomeren Formen der Formel 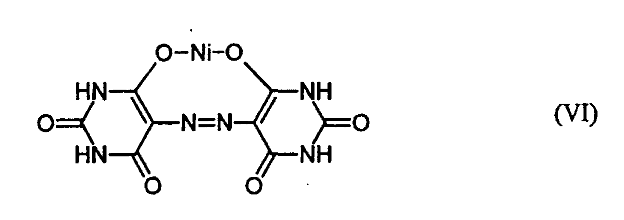 entspricht und mindestens eine andere Verbindung eingeschlossen enthält.

Die Erfindung betrifft weiterhin Metallkomplexe einer Azo-Verbindung, die in Form ihrer tautomeren Strukturen der Formel (V) entspricht, und die wenigstens eine andere Verbindung eingelagert enthält, dadurch gekennzeichnet, daß die Metallkomplexe den Mono-, Di, Tri- oder Tetraanionen der Azoverbindungen der Formel (V) mit den Metallen ausgewählt aus der Gruppe Li, Cs, Mg, Cd, Co, Al, Cr, Sn, Pb, Na, K, Ca, Sr, Ba, Zn, Fe, Cu und Mn, entsprechen. Als bevorzugte eingeschlossene Verbindungen gelten die unten bezeichneten.

Im allgemeinen bildet der Metallkomplex ein schichtförmiges Kristallgitter, bei dem die Bindung innerhalb einer Schicht im wesentlichen über Wasserstoffbrücken und/oder Metallionen erfolgt. Vorzugsweise handelt es sich dabei um Metallkomplexe, die ein Kristallgitter ausbilden, das aus im wesentlichen ebenen Schichten besteht.

Als Metallkomplexe kommen auch solche in Frage, bei denen eine metallhaltige Verbindung, z.B. ein Salz oder Metallkomplex in das Kristallgitter des Nickelkomplexes eingebaut ist. In diesem Fall kann in Formel (VI) bspw. ein Teil des Nickels durch andere Metallionen ersetzt sein oder es können weitere Metallionen in eine mehr oder weniger starke Wechselwirkung mit dem Nickelkomplex treten.

Eingeschlossen sein können sowohl organische als auch anorganische Verbindungen. Verbindungen, die eingeschlossen sein können, entstammen den verschiedenartigsten Verbindungsklassen. Aus rein praktischen Gründen sind solche Verbindungen bevorzugt, die unter Normalbedingungen (25°C, 1 bar) flüssig oder fest sind.

Von den flüssigen Substanzen sind wiederum solche bevorzugt, die einen Siedepunkt von 100°C oder darüber, bevorzugt von größer gleich 150°C bei 1 bar, aufweisen. Geeignete Verbindungen sind vorzugsweise acyclische und cyclische organische Verbindungen, z.B. aliphatische und aromatische Kohlenwasserstoffe, die substituiert sein können, z.B. durch OH, COOH, NH₂, substituiertes NH₂, CONH₂, substituiertes CONH₂, SO₂NH₂, substituiertes SO₂NH₂, SO₃H, Halogen, NO₂, CN, -SO₂-Alkyl, -SO₂-Aryl, -O-Alkyl, -O-Aryl, -O-Acyl.

Im einzelnen seien z.B. genannt: Paraffine und Paraffinöle; Triisobutylen, Tetraisobutylen, Mischungen von aliphatischen und aromatischen Kohlenwasserstoffen, wie sie z.B. bei der Erdölfraktionierung anfallen; chlorierte Paraffinkohlenwasserstoffe wie Dodecylchlorid oder Stearylchlorid; C₁₀-C₃₀-Alkohole wie 1-Decanol, 1-Dodecanol, 1-Hexadecanol, 1-Octadecanol und ihre Mischungen, Oleinalkohol, 1,12-Octadecandiol, Fettsäuren und ihre Salze und Mischungen, z.B. Ameisensäure, Essigsäure, Dodecansäure, Hexadecansäure, Octadecansäure, Ölsäure, Fettsäureester, z.B. die Methylester der C₁₀-C₂₀-Fettsäuren, Fettsäureamide, wie Stearinsäureamid, Stearinsäuremonoethanolamid, Stearinsäurediethanolamid, Stearinsäurenitril, Fettamine, z.B. Dodecylamin, Cetylamin, Hexadecylamin, Octadecylamin und andere; Salze von Fettaminen mit Sulfon- und Carbonsäuren, isocyclische Kohlenwasserstoffe wie Cyclododecan, Decahydronaphthalin, o-, m-, p-Xylol, Mesitylen, Dodecylbenzolgemisch, Tetralin, Naphthalin, 1-Methylnaphthalin, 2-Methylnaphthalin, Biphenyl, Diphenylmethan, Acenaphthen, Fluoren, Anthracen, Phenanthren, m-, p-Terphenyl, o-, p-Dichlorbenzol, Nitrobenzol, 1-Chlornaphthalin, 2-Chlornaphthalin, 1-Nitronaphthalin, isocyclische Alkohole und Phenole und ihre Abkömmlinge wie Benzylalkohol, Decahydro-2-naphthol, Diphenylether, Sulfone, z.B. Diphenylsulfon, Methylphenylsulfon, 4,4'-Bis-2-(hydroxyethoxy)-diphenylsulfon; isocyclische Carbonsäuren und ihre Derivate wie Benzoesäure, 3-Nitrobenzoesäure, Zimtsäure, 1-Naphthalincarbonsäure, Phthalsäure, Phthalsäuredibutylester, Phthalsäuredioctylester, Tetrachlorphthalsäure, 2-Nitrobenzamid, 3-Nitrobenzamid, 4-Nitrobenzamid, 4-Chlorbenzamid, Sulfonsäuren, wie 2,5-Dichlorbenzolsulfonsäure, 3-Nitro-, 4-Nitro-benzolsulfonsäure, 2,4-Dimethylbenzolsulfonsäure, 1- und 2-Naphthalinsulfonsäure, 5-Nitro-1- und 5-Nitro-2-naphthalinsulfonsäure, Di-sec.-butyl-naphthalinsulfonsäuregemisch, Biphenyl-4-sulfonsäure, 1,4-, 1,5-, 2,6-, 2,7-Naphthalindisulfonsäure, 3-Nitro-1,5-naphthalindisulfonsäure, Anthrachinonsulfonsäure-1, Anthrachinonsulfonsäure-2, Diphenyl-4,4'-disulfonsäure, 1,3,6-Naphthalintrisulfonsäure und die Salze dieser Sulfonsäuren z.B. die Natrium-, Kalium-, Calcium-, Zink-, Nickel- und Kupfersalze; Sulfonamide wie Benzolsulfonamid, 2-, 3- und 4-Nitrobenzolsulfonamid, 2-, 3- und 4-Chlorbenzolsulfonamid, 4-Methoxy-benzolsulfonamid, 3,3'-Sulfonylbisbenzolsulfonamid, 4,4'-Oxybisbenzolsulfonsäureamid, 1- und 2-Naphthalinsulfonsäureamid.

Carbonsäure- und Sulfonsäureamide sind eine bevorzugte Gruppe von einzuschließenden Verbindungen, insbesondere geeignet sind auch Harnstoff und substituierte Harnstoffe wie Phenylharnstoff, Dodecylharnstoff und andere sowie deren Polykondensate mit Aldehyden, insbesondere Formaldehyd; Heterocyclen wie Barbitursäure, Benzimidazolon, Benzimidazolon-5-sulfonsäure, 2,3-Dihydroxychinoxalin, 2,3-Dihydroxychinoxalin-6-sulfonsäure, Carbazol, Carbazol-3,6-disulfonsäure, 2-Hydroxychinolin, 2,4-Dihydroxychinolin, Caprolactam, Melamin, 6-Phenyl-1,3,5-triazin-2,4-diamin, 6-Methyl-1,3,5-triazin-2,4-diamin, Cyanursäure.

Bevorzugte Metallkomplexe enthalten eingeschlossen grenzflächenaktive Verbindungen, insbesondere Tenside, die z.B. aus K. Lindner, Tenside-Textilhilfsmittel-Waschrohstoffe, 2. Auflage, Band I, Wissenschaftliche Verlagsgesellschaft mbH, Stuttgart, 1964, bekannt sind. Dabei kann es sich um anionenaktive, nichtionogene oder kationenaktive Verbindungen oder um Ampholyte handeln. Geeignete anionenaktive Verbindungen sind z.B.: Echte Seifen, Salze der Aminocarbonsäuren, Salze niederer bzw. höherer acylierter Aminocarbonsäuren, Fettsäuresulfate, Sulfate von Fettsäureestern, -amiden usw., primäre Alkylsulfate, Sulfate von Oxoalkoholen, sekundäre Alkylsulfate, Sulfate veresterter oder veretherter Polyoxyverbindungen, Sulfate substituierter Polyglykolether (sulfatierte Ethylenoxidaddukte), Sulfate acylierter oder alkylierter Alkanolamine, Sulfonate von Fettsäuren, ihren Estern, Amiden usw., primäre Alkylsulfonate, sekundäre Alkylsulfonate, Alkylsulfonate mit esterartig gebundenen Acylen, Alkyl- bzw. Alkylphenylethersulfonate, Sulfonate von Polycarbonsäureestern, Alkylbenzolsulfonate, Alkylnaphthalinsulfonate, fettaromatische Sulfonate, Alkylbenzimidazolsulfonate, Phosphate, Polyphosphate, Phosphonate, Phosphinate, Thiosulfate, Hydrosulfite, Sulfinate, Persulfate. Geeignete nicht-ionogene Verbindungen sind z.B.: Ester und Ether von Polyalkoholen, Alkylpolyglykolether, Acylpolyglykolether, Alkylarylpolyglykolether, acylierte bzw. alkylierte Alkanolaminpolyglykolether. Geeignete kationenaktive Verbindungen sind z.B.: Alkylaminsalze, quaternäre Ammoniumsalze, Alkylpyridiniumsalze, einfache und quaternäre Imidazolinsalze, Alkyldiamine bzw. Alkylpolyamine, Acyldiamine bzw. Acylpolyamine, Acylalkanolamine, Alkanolaminester, Alkyl-OCH₂-N-pyridiniumsalze, Alkyl-CO-NH-CH₂-N-pyridiniumsalze, Alkylethylenharnstoffe, Sulfoniumverbindungen, Phosphoniumverbindungen, Arseniumverbindungen, Alkylguanidine, Acylbiguanidide. Geeignete Ampholyte sind z.B.: Alkylbetaine, Sulfobetaine und Aminocarbonsäuren. Bevorzugt eingesetzt werden nichtionogene Tenside, insbesondere die Ethylenoxidadditionsprodukte von Fettalkoholen, Fettaminen sowie von Octyl- oder Nonylphenol.

Eine weitere wichtige Gruppe von eingelagerten Verbindungen sind natürliche Harze und Harzsäuren wie z.B. Abietinsäure und ihre Umwandlungsprodukte und Salze. Solche Umwandlungsprodukte sind z.B. hydrierte, dehydrierte und disproportionierte Abietinsäuren. Diese können weiterhin dimerisiert, polymerisiert oder durch Addition von Maleinsäureanhydrid und Fumarsäure modifiziert sein. Von Interesse sind auch die an der Carboxylgruppe modifizierten Harzsäuren wie z.B. die Methyl-, Hydroxyethyl-, Glykol-, Glycerin- und Pentaerythritester, sowie Harzsäurenitrile und Harzsäureamine sowie Dehydroabietylalkohol.

Ebenfalls für eine Einlagerung geeignet sind Polymere, vorzugsweise wasserlösliche Polymere, z.B. Ethylen-propylenoxid-Blockpolymere, vorzugsweise mit einem Mₙ größer gleich 1.000, insbesondere von 1.000 bis 10.000 g/mol, Polyvinylalkohol, Poly-(meth)-acrylsäuren, modifizierte Cellulose, wie Carboxymethylcellulosen, Hydroxyethyl- und -propylcellulosen, Methyl- und Ethylhydroxyethylcellulosen.

Ebenfalls für die Einlagerung geeignet sind Kondensationsprodukte auf Basis von
A) sulfonierten Aromaten,
B) Aldehyden und/oder Ketonen und gegebenenfalls
C) einer oder mehrerer Verbindungen, ausgewählt aus der Gruppe der nicht sulfonierten Aromaten, Harnstoff und Harnstoffderivaten.

Auf Basis von bedeutet, daß das Kondensationsprodukt gegebenenfalls aus weiteren Reaktanden neben A, B und gegebenenfalls C hergestellt wurde. Vorzugsweise werden die Kondensationsprodukte im Rahmen dieser Anmeldung jedoch nur aus A, B und gegebenenfalls C hergestellt.

Als sulfonierte Aromaten der Komponente A) werden im Rahmen dieser Anmeldung auch sulfomethylierte Aromaten verstanden. Bevorzugte sulfonierte Aromaten sind: Naphthalinsulfonsäuren, Phenolsulfonsäuren, Dihydroxybenzolsulfonsäuren, sulfonierte Ditolylether, sulfomethyliertes 4,4'-Dihydroxydiphenylsulfon, sulfoniertes Diphenylmethan, sulfoniertes Biphenyl, sulfoniertes Hydroxybiphenyl, insbesondere 2-Hydroxybiphenyl, sulfoniertes Terphenyl oder Benzolsulfonsäuren.

Als Aldehyde und/oder Ketone der Komponente B) kommen insbesondere aliphatische, cycloaliphatische sowie aromatische in Frage. Bevorzugt sind aliphatische Aldehyde, wobei besonders bevorzugt Formaldehyd sowie andere aliphatische Aldehyde mit 3 bis 5 C-Atomen in Frage kommen.

Als nicht sulfonierte Aromaten der Komponente C) kommen beispielsweise Phenol, Kresol, 4,4'-Dihydroxydiphenylsulfon oder Dihydroxydiphenylmethan in Frage.

Als Harnstoffderivate können beispielsweise Dimethylolharnstoff, Alkylharnstoffe, Melamin oder Guanidin genannt werden.

Als bevorzugte Kondensationsprodukt wird eines auf Basis von
A) wenigstens einem sulfonierten Aromaten, ausgewählt aus der Gruppe von Naphthalinsulfonsäuren, Phenolsulfonsäuren, Dihydroxybenzolsulfonsäuren, sulfonierte Ditolylether, sulfomethyliertes 4,4'-Dihydroxydiphenylsulfon, sulfoniertes Diphenylmethan, sulfoniertes Biphenyl, sulfoniertes Hydroxybiphenyl, insbesondere 2-Hydroxybiphenyl, sulfoniertes Terphenyl und Benzolsulfonsäuren,
B) Formaldehyd und gegebenenfalls
C) einer oder mehreren Verbindungen, ausgewählt aus der Gruppe von Phenol, Kresol, 4,4'-Dihydroxydiphenylsulfon, Dihydroxydiphenylmethan, Harnstoff, Dimethylolharnstoff, Melamin und Guanidin
eingesetzt.

Bevorzugte Kondensationsprodukte sind solche auf Basis von 4,4'-Dihydroxydiphenylsulfon, sulfonierter Ditolylether und Formaldehyd; 4,4'-Dihydroxydiphenylsulfon, Phenolsulfonsäure und Formaldehyd; 4,4'-Dihydroxydiphenylsulfon, Natriumbisulfit, Formaldehyd und Harnstoff; Naphthalinsulfonsäure, 4,4'-Dihydroxydiphenylsulfon und Formaldehyd; sulfoniertes Terphenyl und Formaldehyd; und/oder sulfoniertes 2-Hydroxybiphenyl und Formaldehyd sowie Naphthalinsulfonsäure und Formaldehyd.

Besonders bevorzugt werden als eingelagerte Verbindungen Melamin oder Melaminderivate, insbesondere solche der Formel (VII) 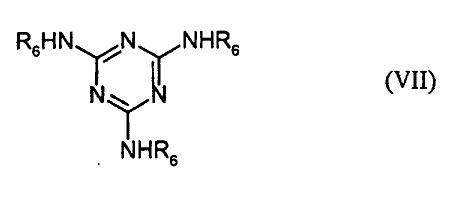 eingesetzt, worin
- R₆: für Wasserstoff oder C₁-C₄-Alkyl, das gegebenenfalls mit OH-Gruppen substituiert ist, steht,
ganz besonders bevorzugt, worin
- R₆: für Wasserstoff steht.

Die Menge an Substanz, die in das Kristallgitter der Metallverbindungen eingelagert werden kann, liegt in der Regel bei 5 % bis 200 Gew.-%, insbesondere 5 bis 120 Gew.-%, bezogen auf die Menge an Wirtsverbindung. Bevorzugt eingelagert werden 10 bis 100 Gew.-%. Es handelt sich hierbei um die Menge an Substanz, die durch geeignete Lösungsmittel nicht auswaschbar ist und die sich aus der Elementaranalyse ergibt. Naturgemäß kann auch mehr oder weniger als die genante Menge an Substanz zugesetzt werden, wobei man gegebenenfalls darauf verzichten kann, einen Überschuß auszuwaschen. Bevorzugt sind Mengen von 10 bis 150 Gew.-%.

Der pH-Wert einer wäßrigen Anschlämmung aus der erfindungsgemäßen Pigmentpräparation und der 20-fachen Menge an Wasser beträgt vorzugsweise größer 6,5 bis 11, insbesondere 7 bis 9.

Die erfindungsgemäßen Präparationen können weitere Zusätze enthalten. Als bevorzugte Zusätze sind organische oder anorganische Basen zu nennen.

Als Basen sind zu nennen: Alkalihydroxide, wie beispielsweise NaOH, KOH oder organische Amine wie Alkylamine, insbesondere Alkanolamine oder Alkylalkanolamine.

Als besonders bevorzugt sind zu nennen Methylamin, Dimethylamin, Trimethylamin, Ethanolamin, n- Propanolamin, n-Butanolamin, Diethanolamin, Triethanolamin, Methylethanolamin oder Dimethylethanolamin.

Weitere Zusätze sind beispielsweise Dispergiermittel, Carbonsäure- und Sulfonsäureamide sowie für Pigmentpräparation übliche Zusätze.

Unter Dispergiermittel im Rahmen dieser Anmeldung wird eine die Pigmentteilchen in ihrer feinen partikulären Form in wässrigen Medien stabilisierende Substanz verstanden. Unter fein partikulär wird vorzugsweise eine Feinverteilung von 0,001 bis 5 µm verstanden, insbesondere von 0,005 bis 1 µm, besonders bevorzugt von 0,005 bis 0,5 µm.

Geeignete Dispergiermittel sind beispielsweise anionisch, kationisch, amphoter oder nichtionogen.

Geeignete anionische Dispergiermittel sind insbesondere Kondensationsprodukte von aromatischen Sulfonsäuren mit Formaldehyd, wie Kondensationsprodukte aus Formaldehyd und Alkylnaphthalinsulfonsäuren oder aus Formaldehyd, Naphthalinsulfonsäuren und/oder Benzolsulfonsäuren, Kondensationsprodukte aus gegebenenfalls substituiertem Phenol mit Formaldehyd und Natriumbisulfit. Geeignet sind außerdem Dispergiermittel aus der Gruppe der Sulfobemsteinsäureester sowie Alkylbenzolsulfonate. Außerdem sulfatierte, alkoxylierte Fettsäurealkohole oder deren Salze. Als alkoxylierte Fettsäurealkohole werden insbesondere solche mit 5 bis 120, vorzugsweise 5 bis 60, insbesondere mit 5 bis 30 Ethylenoxid versehene C₆-C₂₂-Fettsäurealkohole, die gesättigt oder ungesättigt sind, insbesondere Stearylalkohol, verstanden. Besonders bevorzugt ist ein mit 8 bis 10 Ethylenoxideinheiten alkoxylierter Stearylalkohol. Die sulfatierten alkoxylierten Fettsäurealkohole liegen vorzugsweise als Salze, insbesonders als Alkali- oder Aminsalze, vorzugsweise als Diethylaminsalz vor. Weiterhin kommen vor allem Ligninsulfonate in Betracht, z.B. solche, die nach dem Sulfit- oder Kraft-Verfahren gewonnen werden. Vorzugsweise handelt es sich um Produkte, die zum Teil hydrolysiert, oxidiert, propoxyliert, sulfoniert, sulfomethyliert oder desulfoniert und nach bekannten Verfahren fraktioniert werden, z.B. nach dem Molekulargewicht oder nach dem Sulfonierungsgrad. Auch Mischungen aus Sulfit- und Kraftligninsulfonaten sind gut wirksam. Besonders geeignet sind Ligninsulfonate mit einem durchschnittlichen Molekulargewicht zwischen 1 000 und 100 000, einem Gehalt an aktivem Ligninsulfonat von mindestens 80% und vorzugsweise mit niedrigem Gehalt an mehrwertigen Kationen. Der Sulfonierungsgrad kann in weiten Grenzen variieren.

Als nichtionische Dispergiermittel kommen beispielsweise in Frage: Umsetzungsprodukte von Alkylenoxiden mit alkylierbaren Verbindungen, wie z.B. Fettalkoholen, Fettaminen, Fettsäuren, Phenolen, Alkylphenolen, Arylalkylphenolen, wie Styrol-Phenol-Kondensate, Carbonsäureamiden und Harzsäuren. Hierbei handelt es sich z.B. um Ethylenoxidaddukte aus der Klasse der Umsetzungsprodukte von Ethylenoxid mit:
al) gesättigten und/oder ungesättigten Fettalkoholen mit 6 bis 22 C-Atomen oder
b1) Alkylphenolen mit 4 bis 12 C-Atomen im Alkylrest oder
cl) gesättigten und/oder ungesättigten Fettaminen mit 14 bis 20 C-Atomen oder
dl) gesättigten und/oder ungesättigten Fettsäuren mit 14 bis 20 C-Atomen oder
e1) hydrierte und/oder unhydrierte Harzsäuren.

Als Ethylenoxid-Addukte kommen insbesondere die unter a1) bis e1) genannten alkylierbaren Verbindungen mit 5 bis 120, insbesondere 5 bis 100, insbesondere 5 bis 60, besonders bevorzugt 5 bis 30 Mol Ethylenoxid in Frage.

Als Dispergiermittel eignen sich ebenfalls die aus den prioritätsälteren DE-A 19 712 486 oder aus DE-A 19 535 246 bekannten Ester des Alkoxylierungsproduktes der Formel (X), die der Formel (XI) entsprechen sowie diese gegebenenfalls in Mischung mit den zugrundeliegenden Verbindungen der Formel (X). Das Alkoxylierungsprodukt eines Styrol-Phenol-Kondensats der Formel (X) ist wie nachfolgend definiert: 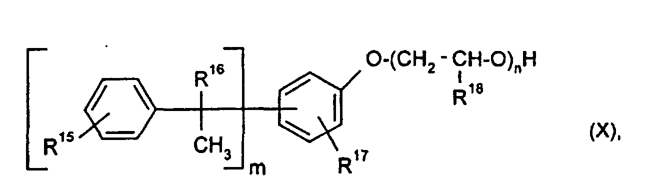 in der
- R¹⁵: Wasserstoff oder C₁-C₄-Alkyl bedeutet,
- R¹⁶: für Wasserstoff oder CH₃ steht,
- R¹⁷: Wasserstoff, C₁-C₄-Alkyl, C₁-C₄-Alkoxy, C₁-C₄-Alkoxycarbonyl oder Phenyl bedeutet,
- m: eine Zahl von 1 bis 4 bedeutet,
- n: eine Zahl von 6 bis 120 bedeutet,
- R¹⁸: für jede durch n indizierte Einheit gleich oder verschieden ist und für Wasserstoff, CH₃ oder Phenyl steht, wobei im Falle der Mitanwesenheit von CH₃ in den verschiedenen -(-CH₂-CH(R¹⁸)-O-)-Gruppen in 0 bis 60 % des Gesamtwertes von n R¹⁸ für CH₃ und in 100 bis 40 % des Gesamtwertes von n R¹⁸ für Wasserstoff steht und wobei im Falle der Mitanwesenheit von Phenyl in den verschiedenen -(-CH₂-CH(R¹⁸)-O-)-Gruppen in 0 bis 40 % des Gesamtwertes von n R¹⁸ für Phenyl und in 100 bis 60 % des Gesamtwertes von n R¹⁸ für Wasserstoff steht.

Die Ester der Alkoxylierungsprodukte (X) entsprechen der Formel (XI) 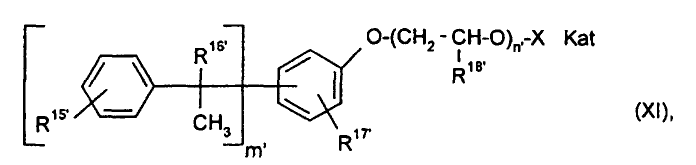 in der
- R^{15'}, R^{16'}, R^{17'}, R^{18'}, m' und n': den Bedeutungsumfang von R¹⁵, R¹⁶, R¹⁷, R¹⁸, m bzw. n, jedoch unabhängig hiervon, annnehmen,
- X: die Gruppe -SO₃, -SO₂, -PO₃ oder -CO-(R¹⁹)-COO bedeutet,
- Kat: ein Kation aus der Gruppe von H , Li , Na , K , NH₄ oder HO-CH₂CH₂-NH₃ ist, wobei im Falle von X = -PO₃ zwei Kat vorliegen und
- R¹⁹: für einen zweiwertigen aliphatischen oder aromatischen Rest steht, vorzugsweise für C₁-C₄-Alkylen, insbesondere Ethylen, C₂-C₄- einfach ungesättigte Reste, insbesondere Acetylen oder gegebenenfalls substituiertes Phenylen, insbesondere ortho-Phenylen steht, wobei als mögliche Substituenten vorzugsweise C₁-C₄-Alkyl, C₁-C₄-Alkoxy, C₁-C₄-Alkoxycarbonyl oder Phenyl in Frage kommen.

Spezielle Einzelverbindungen der Formel (XI) sind beispielsweise aus DE-A 19 712 486 und Gemische der Formeln (X) und (XI) sind beispielsweise DE-A-19 535 256 bekannt, die jeweils Bestandteile dieser Anmeldung sind.

Als ein bevorzugtes Dispergiermittel wird die Verbindung der Formel (XI) eingesetzt. Vorzugsweise eine Verbindung der Formel (XI), worin X einen Rest der Formel -CO-(R¹⁹)-COO- bedeutet und R¹⁹ die obige Bedeutung besitzt.

Bevorzugt ist ebenfalls als Dispergiermittel eine Verbindung der Formel (XI) zusammen mit einer Verbindung der Formel (X) einzusetzen. Vorzugsweise enthält das Dispergiermittel in diesem Fall 5 bis 99 Gew.-% der Verbindung (XI) und 1 bis 95 Gew.-% der Verbindung (X).

Als polymere Dispergiermittel kommen beispielsweise wasserlösliche sowie wasseremulgierbare Typen in Frage, z.B. Homo- sowie Co-Polymerisate, wie statistischeoder Block-Copolymerisate.

Besonders bevorzugte Dispergiermittel sind polymere Dispergiermittel wie beispielsweise AB-, BAB- und ABC-Blockcopolymere. In den AB- oder BAB-Blockcopolymeren ist das A-Segment ein hydrophobes Homopolymer oder Copolymer, das eine Verbindung zum Pigment sicherstellt und der B-Block ein hydrophiles Homopolymer oder Copolymer oder ein Salz davon und stellt das Dispergieren des Pigmentes im wäßrigen Medium sicher. Derartige polymere Dispergiermittel und deren Synthese sind beispielsweise aus EP-A 518 225 sowie EP-A 556 649 bekannt.

Das Dispergiermittel wird vorzugsweise in einer Menge von 0,1 bis 100 Gew.-%, insbesondere 0,5 bis 60 Gew.-%, bezogen auf das eingesetzte Pigment in der Pigmentpräparation, verwendet.

Als Carbonsäure- und Sulfonsäureamide sind beispielsweise geeignet, Harnstoff und substituierte Harnstoffe wie Phenylharnstoff, Dodecylharnstoff und andere; Heterocyclen wie Barbitursäure, Benzimidazolon, Benzimidazolon-5-sulfonsäure, 2,3-Dihydroxychinoxalin, 2,3-Dihydroxychinoxalin-6-sulfonsäure, Carbazol, Carbazol-3,6-disulfonsäure, 2-Hydroxychinolin, 2,4-Dihydroxychinolin, Caprolactam, Melamin, 6-Phenyl-1,3,5-triazin-2,4-diamin, 6-Methyl-1,3,5-triazin-2,4-diamin, Cyanursäure.

Die erfindungsgemäße Präparation enthält vorzugsweise
- 80 bis 100 Gew.-%,: insbesondere 90 bis 99,9 Gew.-% obigen Pigmentes und
- 0 bis 20 Gew.-%,: insbesondere 0,1 bis 10 Gew.-% einer anorganischen oder organischen Base,
jeweils bezogen auf die Summe dieser beiden Komponenten.

In einer besonders bevorzugten Ausführungsform enthalten die erfindungsgemäßen Pigmentpräparationen
- 30 bis 99,9 Gew.-%: wenigstens eines des obigen Pigmentes,
- 0,1 bis 20 Gew.-%: einer anorganischen oder organischen Base und
- 0 bis 50 Gew.-%: eines Dispergiermittels,
jeweils bezogen auf die Präparation.

Selbstverständlich kann die Präparation noch weitere Zusätze enthalten. So können beispielsweise die als die Viskosität einer wäßrigen Suspension erniedrigenden und den Feststoffgehalt erhöhenden Zusätze wie die obengenannten Carbonsäure- und Sulfonsäureamide in einer Menge von bis zu 10 Gew.-%, bezogen auf die Präparation zugesetzt werden.

Besonders bevorzugt enthält die erfindungsgemäße Präparation aber mehr als 90 insbesondere mehr als 95, vorzugsweise mehr als 97 Gew.-% an Pigment, Base und gegebenenfalls Dispergiermittel.

Die Erfindung betrifft weiterhin ein Verfahren zur Herstellung der erfindungsgemäßen Pigmentpräparation, dadurch gekennzeichnet, daß man
a) einen Metallkomplex einer Azoverbindung, die in Form ihrer tautomeren Strukturen der Formel (I) entspricht, und die wenigstens eine andere Verbindung eingelagert enthält, wobei dessen Anschlämmung mit der 20-fachen Menge an Wasser einen pH-Wert von ≤6,5, vorzugsweise von 2 bis 5, besitzt,
b) durch Zugabe einer anorganischen und/oder organischen Base auf einen pH-Wert von >6,5 einstellt, den eine Anschlämmung von a), bezogen auf die Trockenmasse von a), mit der 20-fachen Menge Wasser besitzt und gegebenenfalls nach Zugabe weiterer Zusätze
c) trocknet.

In einer besonderen Ausführungform des Verfahrens wird als Ausgangsverbindung das Pigment eingesetzt, das nach Komplexierung der Azoverbindung der Formel (I) mit dem Metallsalz im sauren Bereich, vorzugsweise bei pH von 2 bis 6,0, Isolierung und anschließendem Waschen mit Wasser oder Wasser-Säuregemischen, wie verdünnter HCl, erhalten wird.

Bevorzugt werden zur pH-Wert-Einstellung die folgenden Basen eingesetzt: NH₃, Alkalihydroxide wie NaOH, KOH und LiOH, organische Amine wie Alkylamine, insbesondere Alkanolamine oder Alkylalkanolamine. Als besonders bevorzugt sind zu nennen Methylamin, Dimethylamin, Triethylamin, Ethanolamin, Diethanolamin, Triethanolamin, Methylethanolamin, Dimethylethanolamin sowie NH₃.

Vorzugsweise wird die Base in einer Menge eingesetzt, so daß ein pH-Wert einer Anschlämmung von a), bezogen auf die Trockenmasse von a), mit der 20-fachen Menge Wasser von größer 6,5 bis 14, eingestellt wird. Verwendet man eine bei der anschließenden Trocknung nichtflüchtige Base wie Alkalihydroxid oder organisches Amin, wird der pH-Wert vorzugsweise auf größer 6,5 bis 11, besonders bevorzugt 7 bis 9, insbesondere auf 7 bis 8,5, eingestellt.

Verwendet man dagegen eine bei der anschließenden Trocknung flüchtige Base, vorzugsweise Ammoniak, die als wäßrige Ammoniak-Lösung eingesetzt werden kann, dann ist es vorteilhaft, einen pH-Wert von 7 bis 14 einzustellen.

Es ist auch möglich, flüchtige und nichtflüchtige Basen gemeinsam einzusetzen. Dabei wird die Menge der bei der Trocknung nichtflüchtigen Base vorzugsweise so gewählt, daß mit ihr ein pH-Wert von vorzugsweise 7 bis 9 eingestellt werden kann. Die Menge der bei der Trocknung flüchtigen Base, vorzugsweise NH₃, wird vorzugsweise so gewählt, daß mit ihr die Einstellung eines pH-Wertes von bis zu pH = 14 möglich ist.

Der nach Zugabe der Base und gegebenenfalls weiteren Zusätzen erhaltene vorzugsweise wäßrige Slurry besitzt vorzugsweise einen Feststoffgehalt von 10 bis 40 Gew.-%, insbesondere 15 bis 30 Gew.-%.

Sofern weitere Zusätze verwendet werden sollen, werden sie vorzugsweise vor der Trocknung zugesetzt. Als solche kommen beispielsweise die obengenannten Inhaltsstoffe der erfindungsgemäßen Präparation in Frage.

Als für das Trocknen c) geeignete Trockner kommen grundsätzlich alle in Frage, beispielsweise Vakuumtrockner, Umlufttrockner, insbesondere Sprühtrockner, insbesondere Ein- und Zweistoff- sowie Rotationsscheibentrockner. Weiterhin kommen Wirbelbetttrocknungsverfahren in Frage.

Als Einstoffdüsentrockner kommen beispielsweise solche mit einer Drallkammerdüse in Frage.

In einer ganz besonders bevorzugten Ausführungsform des erfindungsgemäßen Verfahrens wird als Base Ammoniak gegebenenfalls zusammen mit weiteren bei der Trocknung nicht-flüchtigen Basen eingesetzt und der so erhaltene wäßrige Slurry, vorzugsweise mit einem Feststoffgehalt von 5 bis 40 Gew.-%, sprühgetrocknet. Diese Ausführungsform des erfindungsgemäßen Verfahrens führt zu besonders vorteilhaften Granulaten, die sich durch sehr gute Dispergierfähigkeit, Farbstärke und Brillanz im Substrat auszeichnen. Darüber hinaus sind sie rieselfähig und extrem staubarm.

Einschlußverbindungen, Interkalationsverbindungen und feste Lösungen der Metallverbindungen an sich sind aus der Literatur bekannt. Sie werden ebenso wie deren Herstellung beispielsweise in der EP 0 074 515 und der EP 0 073 463 beschrieben. Bei den Produkten, die man nach den dort beschriebenen Herstellungsverfahren erhält, handelt es sich jedoch um kornharte und schwer dispergierbare Formen, was ihre Verwendung als Pigmente ganz erheblich erschwert.

Die Herstellung dieser Verbindungen wie sie beispielsweise in EP 0 073 464 beschrieben wird, erfolgt so, daß nach der Synthese der Azoverbindung mit einem Metallsalz komplexiert wird und danach, mit oder ohne Zwischenisolierung des Metall-Komplexes, die Umsetzung mit der zu interkalierenden Verbindung erfolgt. Im Falle der technisch interessanten Metallkomplexe, die wenigstens eine andere Verbindung eingelagert enthalten, der zwei- und dreiwertigen Metalle, besonders der technisch und wirtschaftlichen wichtigen Interkalationsverbindung des Azobarbitursäure-Nickel-Komplexes, erfolgen Komplexierung und Interkalation sowie auch die nachfolgende Isolierung im sauren pH-Bereich.

Bei der Trocknung der so hergestellten Produkte erhält man aber unabhängig von den Trocknungsbedingungen, meist sehr komharte und schwierig dispergierbare Pigmente, die oft auch nicht die gewünschte Farbstärken besitzen. Das Problem der Kornhärte und Dispergierbarkeit tritt insbesondere auch bei den technisch interessanten Interkalationsverbindungen des Azobarbitursäure-Nickel-Komplexes auf und hier in ganz besonderem Ausmaß bei der Interkalationsverbindung mit Melamin, der sowohl technisch wie wirtschaftlich erhebliche Bedeutung zukommt.

Es ist bekannt, Kornhärte, Dispergierbarkeit und Farbstärke von Pigmenten durch die unterschiedlichsten Methoden zu verbessern. Beispielsweise sind derartige Verfahren aus DE-A-2 214 700, DE-A-2 064 093 und DE-A-2 753 357 bekannt.

All diese Methoden sind aber sehr aufwendig und führen darüber hinaus nicht selten zu Verlusten in der Raum-Zeit-Ausbeute. Die Anwendung einiger dieser Methoden auf die Interkalationsverbindungen der Metallkomplexe der Azoverbindungen der Formel (I) scheitert z.T. daran, daß diese Pigmente unter den Bedingungen der Nachbehandlung, wie im Fall der Verpastung aus Mineralsäuren, nicht stabil sind.

Völlig überraschend wurde nun gefunden, daß die erfindungsgemäßen Pigmentpräparationen erheblich kornweicher und sehr viel besser dispergierbar sind. Darüber hinaus besitzen damit pigmentierte Substrate eine vergleichsweise höhere Farbstärke sowie eine höhere Brillanz.

Ebenfalls bevorzugte Pigmentpräparationen sind solche, die in einem Alkyd-/Melaminharzsystem gemäß DIN 53 238, Teil 31 nach einer Dispergierzeit von bereits 2 Stunden eine von wenigstens 3, vorzugsweise mehr als 10, insbesondere mehr als 20 % höhere Farbstärke besitzen, als das Pigment dessen Anschlämmung mit der 20-fachen Menge Wasser einen pH von <6,5 ergibt, nach einer entsprechenden Dispergierung von 2,5 bzw. 2 Stunden.

Die festen Pigmentpräparationen eignen sich hervorragend für alle Pigmentanwendungszwecke.

Zum Beispiel eignen sie sich zum Pigmentieren von Lacken aller Art für die Herstellung von Druckfarben, Leimfarben oder Binderfarben, fiir die Massefärbung von synthetischen, halbsynthetischen oder natürlichen makromolekularen Stoffen, wie z.B. Polyvinylchlorid, Polystyrol, Polyamid, Polyethylen oder Polypropylen. Sie können auch für die Spinnfärbung von natürlichen, regenerierten oder künstlichen Fasern, wie z.B. Cellulose-, Polyester-, Polycarbonat-, Polyacrylnitril- oder Polyamidfasern, sowie zum Bedrucken von Textilien und Papier verwendet werden. Aus diesen Pigmenten können feinteilige, stabile, wäßrige Pigmentierungen von Dispersions- und Anstrichfarben, die für die Papierfärbung, für den Pigmentdruck von Textilien, für den Laminatdruck oder für die Spinnfärbung von Viskose brauchbar sind, durch Mahlen oder Kneten in Gegenwart von nichtionogenen, anionischen oder kationischen Tensiden hergestellt werden.

### Beispiele

### Beispiel 1 (Vergleichsbeispiel analog EP-A-73 463)

### Herstellung der Melamin Interkalationsverbindung des Azobarbitursäure-Nickel Komplexes

0,1 mol wasserfeuchte Paste des Na-Salzes der Azobarbitursäure werden in 500 ml destilliertem Wasser mit einem Laborrührer homogen verrührt und auf 95°C erwärmt. 0,105 mol einer 24 %igen wäßrigen Lösung von Nickelchlorid ·6 H₂O werden hinzugetropft. Zur Verlackung werden 30 Minuten gerührt. 0,2 mol Melamin werden eingetragen und es wird bis zum Abschluß der Interkalationsreaktion gerührt. Mit Natronlauge wird auf pH = 5 eingestellt und das Produkt abfiltriert und elektrolytfrei gewaschen. Es resultiert eine wasserfeuchte Paste mit einem Trockengehalt von 43 %.

### Beispiel 2

Die nach Beispiel 1 hergestellte wasserfeuchte Paste wird bei 80°C im Vakuumtrockenschrank getrocknet und ca. 2 Minuten in einer üblichen Labormühle gemahlen. In einer Anschlämmung mit der 20-fachen Menge Wasser stellt sich ein pH-Wert von ≤6 ein.

### Beispiel 3

186 wasserfeuchte Paste einer nach Beispiel 1 hergestellten Melamin-Interkalationsverbindung des Azobarbitursäure-Nickel-Komplexes werden mit 814 ml destilliertem Wasser mit einem Laborrührer homogen verrührt, auf 80°C erwärmt und mit ca. 1,3 g N'N-Dimethylethanolamin auf pH 7,0 bis 7,5 eingestellt und 2 Std. bei diesem pH-Wert und 80°C gerührt. Danach wird auf einer Saugnutsche isoliert, bei 80°C im Vakuumtrockenschrank getrocknet und in einer üblichen Labormühle ca. 2 Minuten gemahlen. In einer Anschlämmung mit der 20-fachen Menge Wasser stellt sich ein pH-Wert von >7 ein.

Das so erhaltene Pigment wird in einem Weißlackaufstrich beurteilt. Dafür wird das Pigment entsprechend den Angaben von DIN 53 238 Teil 31 in einen Alkyd-/Melaminharzsystem eingesetzt.

Nach einstündiger Dispergierzeit zeigte der Lackaufstrich dieses Pigments eine um 3,7 % höhere Farbstärke als der Lackaufstrich des nach 2,5 Stunden Dispergierung unter obigen Bedingungen mit dem nach Beispiel 2 erhaltenen Pigment.

### Beispiel 4

186 g wasserfeuchte Paste einer nach Beispiel 1 hergestellten Melamin-Interkalationsverbindung des Azobarbitursäure-Nickel-Komplexes werden in 814 ml destilliertem Wasser mit einem Laborrührer homogen verrührt, auf 80°C erwärmt und mit ca. 4,0 g Ethanolamin auf pH 8,5 eingestellt und 2 Std. bei diesem pH-Wert und 80°C gerührt. Danach wird das Pigment auf einer Saugnutsche isoliert, bei 80°C im Vakuumtrockenschrank getrocknet und in einer üblichen Labormühle ca. 2 Minuten gemahlen. In einer Anschlämmung mit der 20-fachen Menge Wasser stellt sich ein pH-Wert von >7 ein.

Das so erhaltene Pigment wurde in einem wäßrigen Bindersystem dispergiert. Im Vergleich zum Pigment aus Beispiel 2 besitzt der Aufstrich des Pigments dieses Beispiels eine um 12,5 % höhere Farbstärke.

### Beispiel 5

186 g wasserfeuchte Paste nach Beispiel 1 werden in 814 ml destilliertem Wasser mit einem Laborrührer homogen verrührt, auf 80°C erwärmt und mit ca. 1,8 g Natronlauge 40 gew.-%ig auf pH 8,5 eingestellt und 2 Std. bei diesem pH-Wert und 80°C gerührt. Danach wird das Pigment auf einer Saugnutsche isoliert, bei 80°C im Vakuumtrockenschrank getrocknet und in einer üblichen Labormühle ca. 5 Minuten gemahlen. In einer Anschlämmung mit der 20-fachen Menge Wasser stellt sich ein pH-Wert von >7 ein.

Das so erhaltene Pigment wurde in einem wäßrigen Bindersystem dispergiert. Im Vergleich zum Pigment aus Beispiel 2 besitzt der Aufstrich des Pigments dieses Beispiels eine um 12,5 % höhere Farbstärke.

### Beispiel 6

18,6 kg wasserfeuchte Paste einer nach Beispiel 1 hergestellten Melamin-Interkalationsverbindung des Azobarbitursäure-Nickelkomplexes mit einem Trockengehalt von 39 %, entsprechend 8,0 kg trocken, werden in 20,2 kg destilliertem Wasser und 6,4 kg wäßriger Ammoniaklösung mit 25 Gew. % NH₃ bei Raumtemperatur unter einem Schnellrührer 6 Stunden homogen verrührt.

Anschließend wird auf einem Zweistoffdüsentrockner mit einer Eintrittstemperatur von 180°C und einer Austrittstemperatur von 80°C mit einer Restfeuchte von 2 % sprühgetrocknet. Man erhält ein gelb-braunes Pulver. - Eine 5-prozentige Anschlämmung in Wasser dieses Pigments zeigt einen pH-Wert von 7,5.

Dispergiert man wie in Beispiel 3 beschrieben, stellt jedoch Lackaufstriche nach 10, 20, 30, 60 und 150 minütiger Dispergierzeit her und dispergiert nach dem gleichen Schema das für die Sprühtrocknung eingesetzte Pigment gemäß Beispiel 2, so erhält man die nachfolgenden Farbstärken:

**Tabelle:**

| relative Farbstärke von Pigment | | |
|---|---|---|
| t (min) | aus Bsp. 2 | aus Bsp. 6 |
| 10 | - | 87% |
| 20 | - | 97 % |
| 30 | - | 104% |
| 60 | 100% | 112% |
| 150 | - | 128% |

In diesem Vergleich wurde die 60 minütige Dispergierung des Pigments nach Beispiel 2 als Standard gesetzt. - Bei erhöhter Farbstärke sind die erforderlichen Dispergierzeiten bei dem aus ammoniakalischer Anschlämmung gesprühtrockneten Produkt wesentlich kürzer als bei dem herkömmlich isolierten und getrockneten Ausgangsprodukt (gemäß Beispiel 2).

### Beispiel 7

Verfährt man wie in Beispiel 6 beschrieben, führt die Sprühtrocknung jedoch auf einem Einstoffdüsentrockner mit 180°C Eintrittstemperatur und 80°C Austrittstemperatur mit einer Restfeuchte von ca. 2 % durch, so erhält man ein praktisch staubfreies, rieselartiges braunes Granulat. Eine 5-prozentige Ausschlämmung dieses Granulats in destilliertem Wasser zeigt einen pH-Wert von ca. 7,5.

Dispergiert man wie in Beispiel 6 beschrieben, so erhält man im Vergleich zu dem Pigment aus Beispiel 2 folgende relative Farbstärken

**Tabelle:**

| relative Farbstärke von Pigment | | |
|---|---|---|
| t (min) | aus Bsp. 2 | aus Bsp. 7 |
| 10 | - | 87% |
| 20 | - | 94 % |
| 30 | - | 100 % |
| 60 | 100 % | 108 % |
| 150 | - | 132 % |

### Beispiel 8

18,6 kg wasserfeuchte Paste nach Beispiel 1 werden mit 15 kg destilliertem Wasser, 6,4 kg Ammoniaklösung mit 25 Gew. % NH₃ und 0,12 kg ε-Caprolactam bei Raumtemeratur unter einem Schnellrührer 6 Stunden homogen verrührt. Anschließend wird wie in Beispiel 7 getrocknet.

Eine 5-prozentige Anschlämmung dieses Granulats in destilliertem Wasser zeigt einen pH-Wert von ca. 7,0 an.

Dispergiert man wie in Beispiel 4 beschrieben, stellt jedoch Aufstriche nach 10, 20, 30, 60 und 150 minütiger Dispergierzeit her und diepergiert auf dieselbe Weise das für die Sprühtrocknung eingesetzte Pigment gemäß Beispiel 2, so erhält man die nachfolgenden Farbstärken.

**Tabelle:**

| relative Farbstärke von Pigment | | |
|---|---|---|
| t (min) | aus Bsp. 2 | aus Bsp. 8 |
| 10 | - | 116% |
| 20 | - | 117% |
| 30 | - | 117% |
| 60 | 100% | 117% |
| 150 | - | 118% |

### Beispiel 9

18,6 kg wasserfeuchte Paste nach Beispiel 1 werden mit 12,9 kg destilliertem Wasser, 6,4 kg Ammoniaklösung mit 25 Gew. % NH₃, 0,12 kg ε-Caprolactam und 0,13 kg Ethanolamin bei Raumtemeratur unter einem Schnellrührer 6 Stunden homogen verrührt. Anschließend wird auf einem Einstoffdüsentrockner mit 130°C Eintrittstemperatur und 60°C Austrittstemperatur mit einer Restfeuchte von ca. 2 % getrocknet. So erhält man ein praktisch staubfreies, rieselfähiges braunes Granulat.

Eine 5-prozentige Anschlämmung dieses Granulats in destilliertem Wasser zeigt einen pH-Wert von ca. 8,8 an.

Dispergiert man wie in Beispiel 8 beschrieben aus, und vergleicht die so erhaltenen Dispergierkurven mit denen des Pigments aus Beispiel 2, so erhält man die nachfolgenden Werte für Farbstärke.

**Tabelle:**

| relative Farbstärke von Pigment | | |
|---|---|---|
| t (min) | aus Bsp. 2 | aus Bsp. 9 |
| 10 | - | 118% |
| 20 | - | 118% |
| 30 | - | 118% |
| 60 | 100% | 119 % |
| 150 | - | 119% |

### Beispiel 10

18,6 kg wasserfeuchte Paste nach Beispiel 1 werden mit 18,8 kg destilliertem Wasser, 1,6 kg Ammoniaklösung mit 25 Gew. %, 0,12 kg ε-Caprolactam und 0,13 kg Diethanolamin bei Raumtemeratur unter einem Schnellrührer 6 Stunden homogen verrührt. Anschließend wird auf einem Einstoffdüsentrockner mit 180°C Eintrittstemperatur und 80°C Austrittstemperatur mit einer Restfeuchte von ca. 2% getrocknet. So erhält man ein praktisch staubfreies, rieselfähiges braunes Granulat.

Eine 5-prozentige Anschlämmung dieses Granulats in destilliertem Wasser zeigt einen pH-Wert von ca. 8,4 an.

Dispergiert man wie in Beispiel 6 beschrieben und vergleicht die so erhaltenen Farbstärken mit denen des Pigments nach Beispiel 2, so erhält man die nachfolgenden Werte für Farbstärke.

**Tabelle:**

| relative Farbstärke von Pigment | | |
|---|---|---|
| t (min) | aus Bsp. 2 | aus Bsp. 10 |
| 10 | - | 105 % |
| 20 | - | 125 % |
| 30 | - | 129 % |
| 60 | 100 % | 133 % |
| 150 | - | 140 % |

### Beispiel 11

18,6 kg wasserfeuchte Paste nach Beispiel 1 werden mit 18,8 kg destilliertem Wasser, 1,6 kg Ammoniaklösung mit 25 Gew. %, 0,12 kg ε-Caprolactam und 0,13 kg Ethanolamin bei Raumtemeratur unter einem Schnellrührer 6 Stunden homogen verrührt. Anschließend wird auf einem Einstoffdüsentrockner mit 130°C Eintrittstemperatur und 60°C Austrittstemperatur mit einer Restfeuchte von ca. 2% getrocknet. So erhält man ein praktisch staubfreies, rieselfähiges braunes Granulat.

Eine 5-prozentige Anschlämmung dieses Granulats in destilliertem Wasser zeigt einen pH-Wert von ca. 8,8 an.

Dispergiert man wie in Beispiel 6 beschrieben und vergleicht die so erhaltene Farbstärke mit denen des Pigments aus Beispiel 2, so erhält man die nachfolgenden Werte fiir die Farbstärke.

**Tabelle:**

| relative Farbstärke von Pigment | | |
|---|---|---|
| t (min) | aus Bsp. 2 | aus Bsp. 11 |
| 10 | - | 110% |
| 20 | - | 120 % |
| 30 | - | 127 % |
| 60 | 100% | 137% |
| 150 | - | 138% |

### Beispiel 12

18,6 kg wasserfeuchte Paste nach Beispiel 1 werden mit 12,9 kg destilliertem Wasser, 6,4kg Ammoniaklösung mit 25 Gew. %, 0,12kg ε-Caprolactam und 0,10 kg Dimethylethanolamin bei Raumtemeratur unter einem Schnellrührer 6 Stunden homogen verrührt. Anschließend wird auf einem Einstoffdüsentrockner mit 180°C Eintrittstemperatur und 80°C Austrittstemperatur mit einer Restfeucht von ca. 2% getrocknet. So erhält man ein praktisch staubfreies, rieselfähiges braunes Granulat.

Eine 5-prozentige Anschlämmung dieses Granulats in destilliertem Wasser zeigt einen pH-Wert von ca. 8,3 an.

Dispergiert man wie in Beispiel 8 beschrieben und vergleicht die so erhaltenen Farbstärke mit denen des Pigments wie in Beispiel 2, so erhält man die folgenden Werte für die Farbstärke.

**Tabelle:**

| relative Farbstärke von Pigment | | |
|---|---|---|
| t (min) | aus Bsp. 2 | aus Bsp. 12 |
| 10 | - | 111 % |
| 20 | - | 112% |
| 30 | - | 112% |
| 60 | 100% | 113% |
| 150 | - | 113% |

### Beispiel 13

18,6 kg wasserfeuchte Paste nach Beispiel 1 werden mit 16,0 kg destilliertem Wasser, 6,4 kg Ammoniaklösung mit 25 Gew. % und 0,10 kg Dimethylethanolamin bei Raumtemeratur unter einem Schnellrührer 6 Stunden homogen verrührt. Anschließend wird auf einem Einstoffdüsentrockner mit 180°C Eintrittstemperatur und 80°C Austrittstemperatur mit einer Restfeucht von ca. 2 % getrocknet. So erhält man ein praktisch staubfreies, rieselfähiges braunes Granulat.

Eine 5-prozentige Anschlämmung dieses Granulats in destilliertem Wasser zeigt einen pH-Wert von ca. 8,3 an.

Dispergiert man wie in Beispiel 6 beschrieben und vergleicht die so erhaltenen Farbstärken mit denen des Pigments aus Beispiel 2, so erhält man die nachfolgenden Werte fiir die Farbstärke.

**Tabelle:**

| relative Farbstärke | | |
|---|---|---|
| t (min) | aus Bsp. 2 | aus Bsp. 13 |
| 10 | - | 101 % |
| 20 | - | 116% |
| 30 | - | 128 % |
| 60 | 100 % | 136 % |
| 150 | - | 138 % |

### Anwendungsbeispiel

Die sehr gute Eignung der erfindungsgemäßen Pigmentpräparationen aus den Beispielen 3 bis 13 für die Massefärbung von Papier wurde nach folgendem Verfahren geprüft:
a) Herstellung des Papierrohstoffes:
   In einem Laborholländer wurde eine Stoffinischung bestehend aus
   70 Gew.-% gebleichtem Eukalyptuszellstoff
   30 Gew.-% gebleichtem Kiefernsulfatzellstoff
   bei einer Stoffichte von 3 % auf 25°SR in Leitungswasser gemahlen.
b) Blattbildung und Einfärbung
   In einem Färbeglas (1000 ml) wurden 2,5 g des oben gemahlenen Faserstoffes (fest) unter ständigem Rühren in 600 ml Leitungwasser verdünnt und 30 Gew.-% Titandioxid-Pigment (Bayertitan® R-PL-1, Bayer AG) bezogen auf Faserstoff fest, als 10 gew.-%ige wäßrige Dispersion zugegeben. Nach 10 min Rühren wurde die zur Einstellung einer Richttyptiefe von 1/25 (DIN 54000) benötigte Menge der jeweiligen Pigmentpräparation (siehe unten) zugefügt und nach einer Rührzeit von 5 min. 5 Gew.-% Nadavin®DHF, Bayer AG, bezogen auf Faserstoff zugegeben. Falls erforderlich, wurde nach weiteren 10 min der pH-Wert auf 6,5-7,0 eingestellt.
   Auf einer Blattbildungsanlage (System Rapid-Köthen®) wurde die Blattbildung durchgeführt und anschließend das Blatt bei ca. 95°C in ca. 8 min. im Trockenschrank getrocknet.
   Die Ermittlung der benötigten Menge der jeweiligen Pigmentpräparation für 1/25 Richttyptiefe erfolgte anhand des oben beschriebenen Verfahrens durch Messung der Farbstärkedifferenz auf einem Meßgerät Typ Macbeth Color Eye 7000 gegen ein coloristisch entsprechendes Textilmuster (1/25 Richttyptiefe), dessen Farbstärke zu 100 % gesetzt wurde.
   Nach Ermittlung der für 1/25 Richttyptiefe benötigten Menge der jeweiligen Pigmentpräparation wurden auf einer Laborpapiermaschine analoge Stufenlösungen nach oben genannten Rezepturen gefertigt.
   Diese eingefärbten Rohpapiere wurden auf Lichtechtheit (DIN 54004), Styrol- und Weichmacher-(Dibutylphthalat)echtheit geprüft. Die Bewertung erfolgte nach 24 Stunden Eintauchen der gefärbten Papierstreifen hinsichtlich Ausbluten und evtl. Anfärbung der Lösung.
   Ebenso erfolgte eine Prüfung der Säureechtheit (10 %ige Schwefelsäure) und Alkaliechtheit (10%ige Sodalösung) durch Einwirkung eines Tropfens der jeweiligen Lösung über 1 min. auf das gefärbte Papier, Wegnahme des Überschusses mittels Filterpapier und Beurteilung der Papiere in feuchtem Zustand.
   Die Verwendung der erfindungsgemäßen Pigmentpräparationen ergab sehr farbstarke, brillante Einfärbungen mit ausgezeichneten Echtheiten.
   Die erfindungsgemäßen Pigmentpräparationen der Beispiele 3 bis 13 eigneten sich insbesondere auch zur Einfärbung von sogenannten Dekorlaminatpapieren, wie sie zur Herstellung von Dekorschichtpreßstoffen verwendet werden.
   Beispielsweise wurden jeweilige Rohpapiere, wie oben beschrieben hergestellt mit einer 50%igen wäßrigen Melaminformaldehyd-Lösung auf einen Harzanteil von ca. 56% beschichtet, im Trockenschrank-Durchlaufverfahren 2,5 min bei 120°C auf eine Restfeuchte von ca. 4-6 Gew.-% vorkondensiert und 5 min bei verschiedenen Temperaturen von 150 bis 180°C und einem Druck von 10 N/mm² auf einer Hochdruckpresse zu einem Laminat verpreßt.
   Der Laminataufbau bestand aus:
   - 1: Preßplatte, verchromt,
   - 2: gering pigmentierte Underlaypapiere (melaminharzgetränkt)
   - 2: Natronkraftpapiere (phenolharzgetränkt)
   - 1: erfindungsgemäß pigmentiertes Dekorpapier (gem. Beispielen3-13)
   - 1: Preßplatte, verchromt

   Die erfindungsgemäß pigmentierten Papiere (Dekorpapiere) ließen sich in dem angegebenen Temperaturbereich einwandfrei verpressen und ergaben hoch brillante und farbstarke Laminate. Eine Farbnuancen-Verschiebung bei Verpressung mit 150°C und 180°C konnte nicht festgestellt werden.

## Patentansprüche

1. Feste Pigmentpräparationen enthaltend als Pigment wenigstens einem Metallkomplex einer Azo-Verbindung, die in Form ihrer tautomeren Strukturen der Formel (I) entspricht 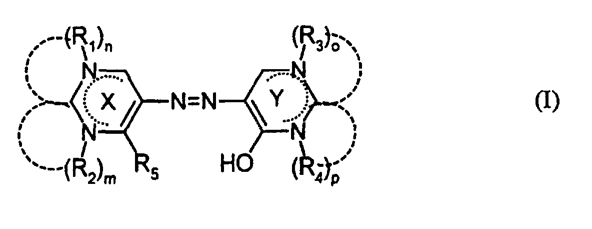 worin die mit
X und Y bezeichneten Ringe unabhängig voneinander je einen oder zwei Substituenten aus der Reihe =O, =S, =NR₇, -NR₆H₇, -OR₆, -SR₆, -COOR₆, -CN, -CONR₆R₇, -SO₂R₈, 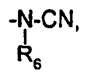 Alkyl, Cycloalkyl, Aryl und Aralkyl tragen können, wobei die Summe der endo- und exocyclischen Doppelbindungen fiir jeden der Ringe X und Y drei ist,
R₆ für Wasserstoff, Alkyl, Cycloalkyl, Aryl oder Aralkyl und
R₇ für Wasserstoff, Cyan, Alkyl, Cycloalkyl, Aryl, Aralkyl oder Acyl stehen und
R₈ Alkyl, Cycloalkyl, Aryl oder Aralkyl bezeichnet,
R₁, R₂, R₃, R₄ unabhängig voneinander für Wasserstoff, Alkyl, Cycloalkyl, Aryl oder Aralkyl stehen und weiterhin, wie in Formel (I) durch die unterbrochenen Linien angedeutet wird, 5- oder 6-gliedrige Ringe ausbilden können, an die weitere Ringe ankondensiert sein können,
R₅ -OH, -NR₆R₇, Alkyl, Cycloalkyl, Aryl oder Aralkyl bedeutet, wobei die für R₁ bis R₈ genannten CH-Bindungen enthaltenden Substituenten ihrerseits substituiert sein können und m, n, o, p 1 oder für den Fall, daß von den Ring-Stickstoffatomen Doppelbindungen ausgehen, wie in Formel (I) durch die punktierten Linien angedeutet wird, auch Null bedeuten können,
und der wenigstens eine andere Verbindung eingelagert enthält, **dadurch gekennzeichnet, daß** eine Anschlämmung der festen Pigmentpräparationen mit der 20-fachen Menge Wasser einen pH-Wert von >6,5 aufweist.

2. Pigmentpräparationen gemäß Anspruch 1, **dadurch gekennzeichnet, daß** in der Verbindung der Formel (I) der mit X gekennzeichnete Ring für einen Ring der Formel 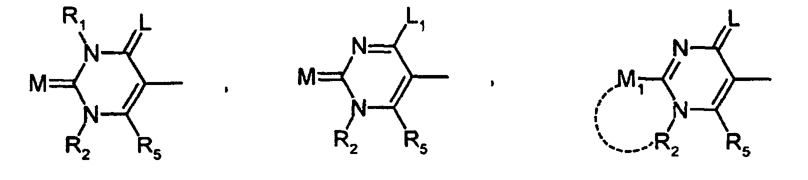 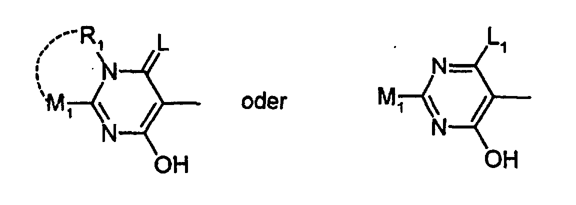 steht,
in denen
L und M unabhängig voneinander für =O, =S oder =NR₆ stehen
L₁ Wasserstoff, -OR₆, -SR₆, -NR₆R₇, -COOR₆, -CONR₆R₇, -CN, Alkyl, Cycloalkyl, Aryl oder Aralkyl und
M₁ -OR₆, -SR₆, -NR₆R₇, -COOR₆, -CONR₆R₇, -CN, -SO₂R₈, 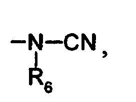 Alkyl, Cycloalkyl, Aryl oder Aralkyl bezeichnen, wobei die Substituenten M₁ und R₁ oder M₁ und R₂ einen 5- oder 6-gliedrigen Ring ausbilden können, und
R₁, R₂ und R₅ die oben angegebenen Bedeutungen besitzen.

3. Pigmentpräparation gemäß Anspruch 1, **dadurch gekennzeichnet, daß** die Azoverbindung der Formel (I) in Form ihrer freien Säure der Formel (II) oder (III) oder einer ihrer tautomeren Formeln entspricht 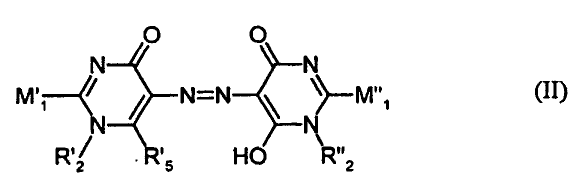 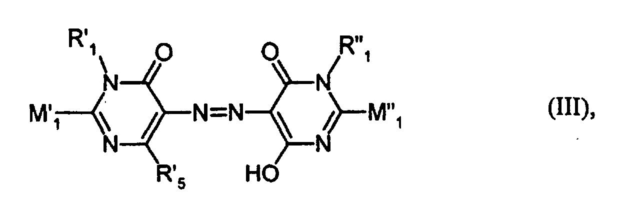 in denen
R'₅ -OH oder -NH₂ bezeichnet,
R'₁, R"₁, R'₂ und R"₂ jeweils für Wasserstoff steht und
M'₁ und M"₁ unabhängig voneinander fiir Wasserstoff, -OH, -NH₂, -NHCN, Arylamino oder Acylamino stehen.

4. Pigmentpräparationen gemäß Anspruch 1, **dadurch gekennzeichnet, daß** die Azoverbindung der Formel (I) der Formel (V) oder einer tautomeren Form davon entspricht

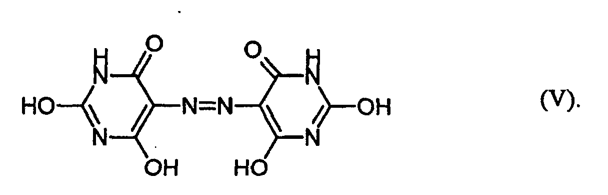

5. Pigmentpräparation gemäß Anspruch 1, **dadurch gekennzeichnet, daß** die Metallkomplexe der Azoverbindung der Formel (I), die wenigstens eine andere Verbindung enthalten, den Mono-, Di-, Tri- und Tetraanionen der Azoverbindungen der Formel (I) mit den Metallen ausgewählt aus der Gruppe Li, Cs, Mg, Cd, Co, Al, Cr, Sn, Pb, Na, K, Ca, Sr, Ba, Zn, Fe, Ni, Cu und Mn entsprechen.

6. Pigmentpräparationen gemäß Anspruch 1, **dadurch gekennzeichnet, daß** als Metallkomplex das Ni-Salz bzw. -Komplex der Azoverbindung der Formel (I) eingesetzt wird.

7. Pigmentpräparationen gemäß Anspruch 1, **dadurch gekennzeichnet, daß** der Metallkomplex eine cyclische oder acyclisch organische Verbindung, insbesondere Melamin enthält.

8. Pigmentpräparationen gemäß Anspruch 1, **dadurch gekennzeichnet, daß** die wäßrige Anschlämmung einen pH-Wert von 7 bis 9 besitzt.

9. Verfahren zur Herstellung der Pigmentpräparation gemäß Anspruch 1, **dadurch gekennzeichnet, daß** man
a) einen Metallkomplex einer Azoverbindung, die in Form ihrer tautomeren Strukturen der Formel (I) entspricht, und die wenigstens eine andere Verbindung eingelagert enthält, wobei dessen Anschlämmung mit der 20-fachen Menge an Wasser einen pH-Wert von ≤6,5, vorzugsweise von 2 bis 5, besitzt,
b) durch Zugabe einer anorganischen und/oder organischen Base auf einen pH-Wert von >6,5 einstellt, den eine Anschlämmung von a), bezogen auf die Trockenmasse von a), mit der 20-fachen Menge Wasser besitzt und gegebenenfalls nach Zugabe weiterer Zusätze
c) trocknet.

10. Verwendung der Pigmentpräparationen gemäß Anspruch 1 zur Herstellung von Druckfarben, Leimfarben oder Binderfarben, für die Massefärbung von synthetischen, halbsynthetischen oder natürlichen makromolekularen Stoffen, insbesondere Polyvinylchlorid, Polystyrol, Polyamid, Polyethylen oder Polypropylen, sowie für die Spinnfärbung von natürlichen, regenerierten oder künstlichen Fasern, wie z.B. Cellulose-, Polyester-, Polycarbonat-, Polyacrylnitril- oder Polyamidfasern, sowie zum Bedrucken von Textilien und Papier.

## Claims

1. Solid pigment preparations comprising as pigment at least one metal complex of an azo compound which in the form of its tautomeric structures conforms to the formula (I) 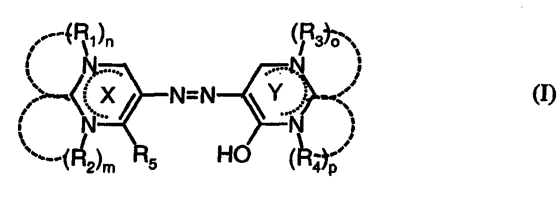 wherein
the rings X and Y may each independently bear one or two substituents selected from the group consisting of =O, =S, =NR₇, -NR₆H₇, -OR₆, -SR₆, -COOR₆, -CN, -CONR₆R₇, -SO₂R₈, 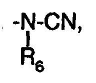 alkyl, cycloalkyl, aryl and aralkyl, the sum total of the endo- and exocyclic double bonds being three for each of the rings X and Y,
R₆ is hydrogen, alkyl, cycloalkyl, aryl or aralkyl,
R₇ is hydrogen, cyano, alkyl, cycloalkyl, aryl, aralkyl or acyl,
R₈ is alkyl, cycloalkyl, aryl or aralkyl,
R₁, R₂, R₃ and R₄ are each independently hydrogen, alkyl, cycloalkyl, aryl or aralkyl and furthermore, as indicated by the broken lines in the formula (I), may form 5- or 6-membered rings to which further rings may be fused,
R₅ is -OH, -NR₆R₇, alkyl, cycloalkyl, aryl or aralkyl, the substituents mentioned for R₁ to R₈ which contain CH bonds may in turn be substituted, and m, n, o and p are each 1 or, if the ring nitrogen atoms are the starting points for double bonds, as indicated by the dotted lines in the formula (I), may also be zero,
and which metal complex hosts at least one other compound as guest compound, **characterized in that** a slurry of the solid pigment preparations with 20 times the amount of water has a pH of >6.5.

2. Pigment preparations according to Claim 1, **characterized in that**, in the compound of the formula (I), the X ring represents a ring of the formula 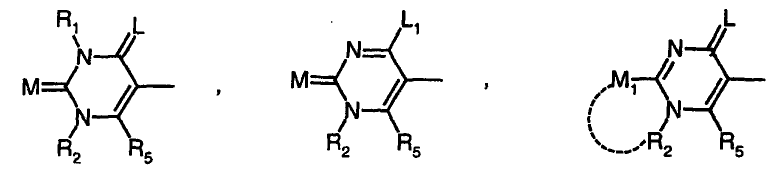 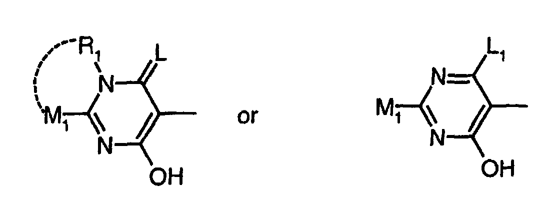 or
where
L and M are each independently =O, =S or =NR₆,
L₁ is hydrogen, -OR₆, -SR₆, -NR₆R₇, -COOR₆, -CONR₆R₇, -CN, alkyl, cycloalkyl, aryl or aralkyl,
M₁ is -OR₆, -SR₆, -NR₆R₇, -COOR₆, -CONR₆R₇, -CN, -SO₂R₈, 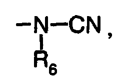 alkyl, cycloalkyl, aryl or aralkyl, and the substituents M₁ and R₁ or M₁ and R₂ may form a 5- or 6-membered ring, and
R₁, R₂ and R₅ are each as defined above.

3. Pigment preparation according to Claim 1, **characterized in that** the azo compound of the formula (I) in the form of its free acid conforms to the formula (II) or (III) or one of its tautomeric formulae 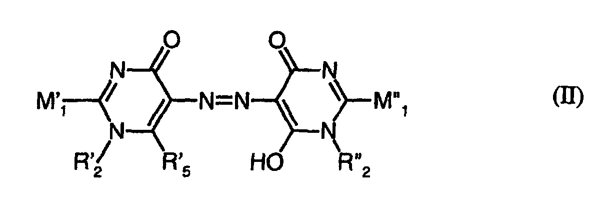 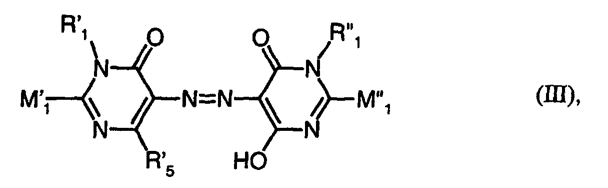 where
R'₅ is -OH or -NH₂,
R'₁, R"₁, R'₂ and R"₂ are each hydrogen, and
M'₁ and M"₁ are each independently hydrogen, -OH, -NH₂, -NHCN, arylamino or acylamino.

4. Pigment preparations according to Claim 1, **characterized in that** the azo compound of the formula (I) conforms to the formula (V) or a tautomeric form thereof

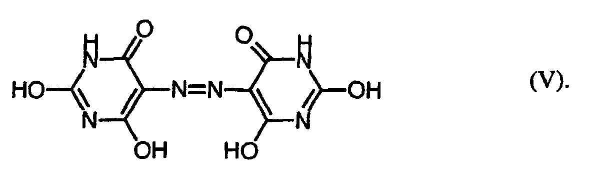

5. Pigment preparation according to Claim 1, **characterized in that** the metal complexes of the azo compound of the formula (I) which contain at least one other compound correspond to the mono-, di-, tri- and tetraanions of the azo compounds of the formula (I) with the metals selected from the group consisting of Li, Cs, Mg, Cd, Co, Al, Cr, Sn, Pb, Na, K, Ca, Sr, Ba, Zn, Fe, Ni, Cu and Mn.

6. Pigment preparations according to Claim 1, **characterized in that** the metal complex used is the Ni salt or complex of the azo compound of the formula (I).

7. Pigment preparations according to Claim 1, **characterized in that** the metal complex contains a cyclic or acyclically organic compound, especially melamine.

8. Pigment preparations according to Claim 1, **characterized in that** the aqueous slurry has a pH of 7 to 9.

9. Process for producing the pigment preparation of Claim 1, **characterized in that**
a) a metal complex of an azo compound which in the form of its tautomeric structures conforms to the formula (I) and which contains at least one other compound as guest, whose slurry with 20 times the amount of water has a pH of ≤6.5, preferably of 2 to 5,
b) is adjusted by addition of an inorganic and/or organic base to a pH of >6.5, the value possessed by a slurry of a), based on the dry matter of a), with 20 times the amount of water, and optionally after addition of further additives
c) dried.

10. Use of the pigment preparations of Claim 1 for producing printing colours, distemper colours or binder colours, for the mass coloration of synthetic, semisynthetic or natural macromolecular substances, especially polyvinyl chloride, polystyrene, polyamide, polyethylene or polypropylene, and for the spin-dyeing of natural, regenerated or artificial fibres, for example cellulose, polyester, polycarbonate, polyacrylonitrile or polyamide fibres, and also for printing textiles and paper.

## Revendications

1. Compositions pigmentaires solides contenant en tant que pigments au moins un complexe métallique d'un dérivé azoïque qui, sous ses formes de structure tautomères, répond à la formule (I): 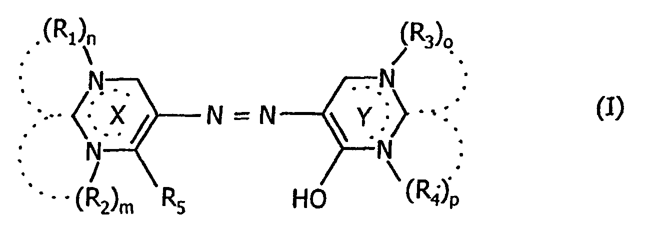 dans laquelle
Les cycles X et Y peuvent porter, indépendamment l'un de l'autre, un ou deux substituant choisis parmi =O, =S, =NR₇, -NR₆H₇, -OR₆, -SR₆, -COOR₆, -CN, -CONR₆R₇, -SO₂R₈, 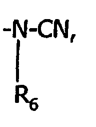 les groupes alkyle, cycloalkyle, aryle et aralkyle, la somme des doubles liaisons endo- et exo-cycliques étant égale à 3 pour chacun des cycles X et Y,
R₆ représente l'hydrogène, un groupe alkyle, cycloalkyle, aryle ou aralkyle et
R₇ représente l'hydrogène, un goupe cyano, alkyle, cycloalkyle, aralkyle ou acyle et
R₈ représente un groupe alkyle, cycloalkyle, aryle ou aralkyle,
R₁, R₂, R₃, R₄ représentent chacun, indépendamment les uns des autres, l'hydrogène, un groupe alkyle, cycloalkyle, aryle ou aralkyle et peuvent en outre former, comme représenté dans la formule (I) par les traits en pointillés, des cycles à 5 ou 6 chaînons sur lesquels d'autres cycles peuvent être condensés,
R₅ représente un groupe -OH, -NR₆R₇, alkyle, cycloalkyle, aryle ou aralkyle,
les substituant mentionnés en référence à R₁ à R₈ qui portent des liaisons CH pouvant en outre être substituées, et
m, n, o, p sont égaux à 1 mais peuvent également être égaux à 0 dans les cas où des doubles liaisons partent des atomes d'azote cycliques comme représenté dans la formule (I) par les traits en pointillés, et qui contient au moins un autre composé à l'état occlus, **caractérisées en ce qu'**une dispersion des compositions pigmentaires solides dans 20 fois leur poids d'eau présente un pH supérieur à 6,5.

2. Compositions pigmentaires selon la revendication 1, **caractérisées en ce que**, dans le composé de formule (I), le cycle X répond à l'une des formules 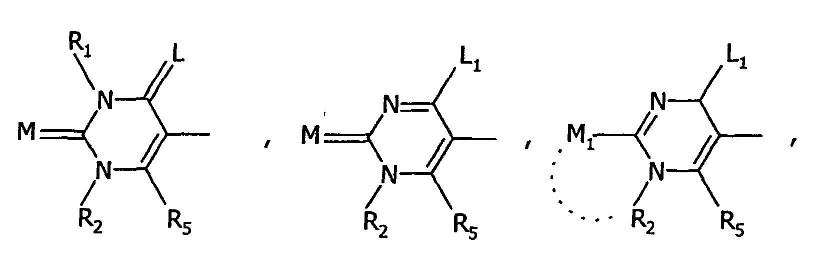 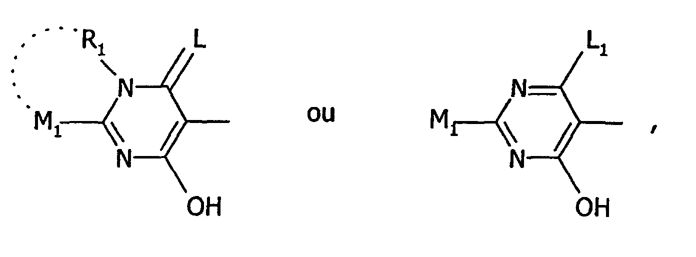 dans lesquelles
L et M représentent chacun, indépendamment l'un de l'autre, =O, =S ou =NR₆,
L₁ représente l'hydrogène, un groupe -OR₆, -SR₆, -NR₆R₇, -COOR₆, -CONR₆, -CONR₆R₇, -CN, alkyle, cycloalkyle, aryle ou aralkyle et
M₁ représente un groupe -OR₆, -SR₆, -NR₆R₇, COOR₆, -CONR₆R₇, -CN, -SO₂R₈, 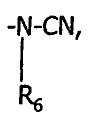 alkyle, cycloalkyle, aryle ou aralkyle, les substituant M₁ et R₁ ou M₁ et R₂ pouvant également former un cycle à 5 ou 6 chaînons et
R₁, R₂ et R₅ ont les significations indiquées ci-dessus.

3. Compositions pigmentaires selon la revendication 1, **caractérisées en ce que** le dérivé azoïque de formule I, à l'état d'acide libre, répond à la formule (II) ou (III) ou à l'une de leurs formules tautomères 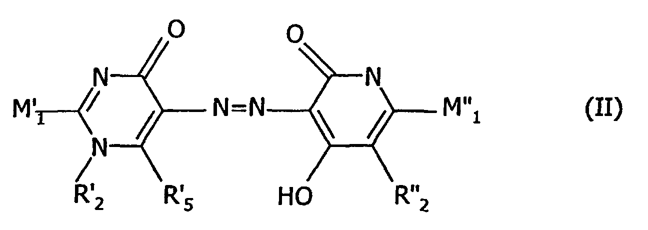 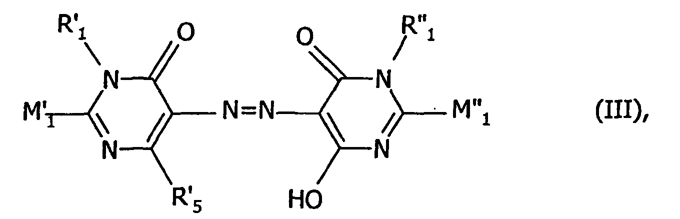 dans lesquelles
R'₅ représente un groupe -OH ou -NH₂,
R'₁, R"₁, R'₂ et R"₂ représentent tous l'hydrogène et
M'₁ et M"₁ représentent chacun, indépendamment l'un de l'autre, l'hydrogène, un groupe -OH, -NH₂, -NHCN, arylamino ou acylamino.

4. Compositions pigmentaires selon la revendication 1, **caractérisées en ce que** le dérivé azoïque de formule (I) répond à la formule (V) ou à l'une de ses formes tautomères

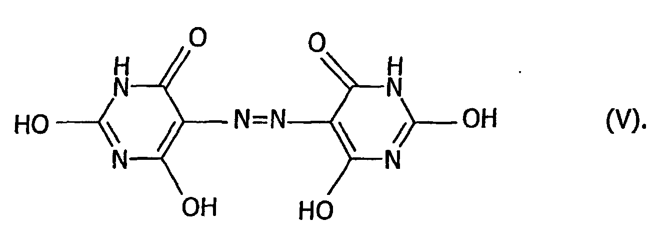

5. Composition pigmentaire selon la revendication 1, **caractérisée en ce que** les complexes métalliques du dérivé azoïque de formule (I) qui contiennent au moins un autre composé correspondent aux mono-, di-, tri- et tétra-anions des dérivés azoïques de formule (I) et des métaux choisis dans le groupe consistant en Li, Cs, Mg, Cd, Co, Al, Cr, Sn, Pb, Na, K, Ca, Sr, Ba, Zn, Fe, Ni, Cu et Mn.

6. Compositions pigmentaires selon la revendication 1, **caractérisées en ce que** l'on utilise en tant que complexe métallique le sel ou complexe de Ni du dérivé azoïque de formule (I).

7. Compositions pigmentaires selon la revendication 1, **caractérisées en ce que** le complexe métallique contient un dérivé organique cyclique ou acyclique, plus spécialement la mélamine.

8. Compositions pigmentaires selon la revendication 1, **caractérisées en ce que** la dispersion aqueuse présente un pH de 7 à 9.

9. Procédé pour la préparation des compositions pigmentaires selon la revendication 1, **caractérisé en ce que**
a) partant d'un complexe métallique d'un dérivé azoïque qui, sous l'une de ses formes de structures tautomères, répond à la formule (I), et qui contient au moins un autre composé à l'état occlus, dont la dispersion dans 20 fois son poids d'eau présente un pH inférieur ou égal à 6,5 et de préférence compris entre 2 et 5,
b) on le règle à un pH supérieur à 6,5 par addition d'une base minérale et/ou organique, ce pH étant celui d'une dispersion de a), exprimé en poids sec, dans 20 fois son poids d'eau, et, le cas échéant après adjonction d'autres additifs,
c) on sèche.

10. Utilisation des compositions pigmentaires selon la revendication 1 pour la préparation d'encres d'impression, de peintures à la colle ou de couleurs pour liants, pour la coloration dans la masse de substances macromoléculaires synthétiques, semi-synthétiques ou naturelles, en particulier du chlorure de polyvinyle, du polystyrène, des polyamides, du polyéthylène ou du polypropylène ou pour la coloration au filage de fibres naturelles, régénérées ou artificielles, par exemple des fibres cellulosiques, des fibres de polyesters, de polycarbonates, de polyacrylonitrile ou de polyamides, ou encore pour l'impression des textiles et du papier.
